# EUROPÄISCHE PATENTSCHRIFT

(11) **EP 2 906 888 B1**
(45) Veröffentlichungstag und Bekanntmachung des Hinweises auf die Patenterteilung: **01.08.2018**
(21) Anmeldenummer: 13780329.2
(22) Anmeldetag: 11.10.2013
(51) Int. Cl.: F25D 23/06, F16B 19/02, F16B 5/06

(54) **KÄLTEGERÄT MIT EINBAUTEIL**
REFRIGERATOR WITH BUILT-IN PART
RÉFRIGÉRATEUR AVEC PIÈCE INTÉGRÉE

(30) Priorität: 15.10.2012 DE 102012218697
(43) Veröffentlichungstag der Anmeldung: 19.08.2015
(73) Patentinhaber: BSH Hausgeräte GmbH, 81739 München (DE)
(72) Erfinder: CIESLIK, Detlef, 89537 Giengen (DE); PFLOMM, Berthold, 89077 Ulm (DE)
(86) Internationale Anmeldenummer: PCT/EP2013/071300
(87) Internationale Veröffentlichungsnummer: WO 2014/060314

(56) Entgegenhaltungen:
- WO-A1-02/42700
- WO-A1-2005/100889
- DE-U1- 20 005 803
- US-A- 3 917 206
- US-A1- 2003 071 550
- US-B1- 6 471 313

## Beschreibung

Die vorliegende Erfindung betrifft ein Kältegerät, insbesondere ein Haushaltskältegerät, mit einem in einer Lagerkammer des Kältegeräts montierten Einbauteil. Haushaltskältegeräte haben im allgemeinen einen Innenbehälter, der an seiner Außenseite mit Isolationsmaterial umschäumt ist und an dessen Innenseite diverse Einbauteile wie etwa Fachböden, Verdampfer, Beleuchtung etc. verankert sind.

Beim Ausschäumen des Kältegerätegehäuses neigt das Isolationsmaterial dazu, durch eventuelle undichte Stellen des Innenbehälters in den von ihm begrenzten Innenraum einzudringen und sich dort zu verteilen. Verunreinigungen durch das Isolationsmaterial sind aus dem Innenraum nur schwer wieder zu beseitigen, so dass von einer solchen Verunreinigung betroffene Geräte in der Regel nicht mehr verkäuflich sind und verworfen werden. Die Vermeidung von Undichtigkeiten, über die das Isolationsmaterial entweichen kann, hat daher für eine wirtschaftliche Kältegerätefertigung hohe Bedeutung.

Ein bekannter Ansatz, um eine inhärente Sicherheit vor dem Durchtritt von Isolationsmaterial zu erreichen, ist, Öffnungen im Innenbehälter so weit wie möglich zu vermeiden und Einbauteile mit Hilfe von Halteteilen zu verankern, die in im Innenbehälter angezogene Vertiefungen eingreifen. Ein Kältegerät, bei dem eine Verdampferplatte im Innenraum mit Hilfe von in solche Vertiefungen eingreifenden Halteteilen montiert ist, ist aus EP 1 138 961 A1 bekannt.

Ein anderer Ansatz ist in WO 2008/100889 beschrieben. Bei dem in dieser Schrift offenbarten Kältegerät ist ein kegelförmiges, mit einer umlaufenden Nut versehenes Halteteil aus elastisch verformbarem Material von der Schaumseite her in ein Loch des Innenbehälters eingeschoben, und eine Dichtwirkung resultiert daraus, dass der Rand des Lochs in die Nut eingreift. US 6 471 313 B1, US 3 917 206 A, US 2003/071550 A1, WO 02/42700 A1 und DE 200 05 803 U1 offenbaren auch treffenden Stand der Technik. Ein weiteres Problem, das sich beim Ausschäumen des Kältegerätegehäuses ergeben kann, sind Verformungen des Innenbehälters unter dem Druck des expandierenden Isolationsmaterials. Insbesondere die ebenen Wandflächen an des Innenbehälters neigen dazu, sich beim Ausschäumen zu wölben. Dies ist insbesondere dann störend, wenn ein Verdampfer im Innenraum vor einer solchen Wandfläche montiert ist, da eine dem Verdampfer zugewandte konvexe Wölbung des Innenbehälters die Luftzirkulation im Zwischenraum zwischen Verdampfer und Innenbehälterwand behindern und dadurch auch die Effizienz des Verdampfers beeinträchtigen kann.

Eine Aufgabe der vorliegenden Erfindung ist, ein Kältegerät und ein Montageverfahren dafür zu schaffen, die eine preiswerte und Fertigung mit geringem Aufwand ermöglichen und dennoch ein hohes Maß an Sicherheit gegenüber dem Durchtritt von Isolationsmaterial in die Lagerkammer bieten.

Die Aufgabe wird gelöst durch ein Kältegerät mit den Merkmalen des Anspruchs 1. Die elastische Spannung sorgt dafür, dass das Halteteil sich an den gesamten Rand der Öffnung schaumdicht anschmiegt. Nach Abbinden des Isolationsmaterials kann das Halteteil wieder freigegeben werden, so dass es sich - soweit seine Einbausituation dies zulässt - wieder entspannt, da dann eine dann eventuell nicht mehr vollständige Schaumdichtigkeit der Verbindung zwischen Innenbehälter und Halteteil nicht mehr zum Durchtritt von Isolationsmaterial führen kann.

Das Halteteil besteht aus einem Schaumstoff und ist in der elastisch gespannten Konfiguration komprimiert. Der Schaumstoff ermöglicht nach der Montage eine bessere Schwingungsentkopplung zwischen dem Einbauteil und dem Innenbehälter, als dies mit einem Halteteil aus hartem oder auch aus gummielastischem Kunststoff möglich wäre. Gleichzeitig ist es durch die Kompression des Schaumstoffs möglich, ein Eindringen des Isolationsmaterials in die Poren des Schaumstoffs und damit einen Verlust an Elastizität zu verhindern.

Die Kompression des Schaumstoffs ist auf einfachste Weise dadurch erreichbar, dass das Halteteil zwischen Innenbehälter und Einbauteil komprimiert wird. Gleichzeitig verhindert eine dabei auf das Einbauteil ausgeübte, gegen den Innenbehälter orientierte Haltekraft, dass das Halteteil unter dem in entgegengesetzter Richtung wirkenden Druck des Isolationsmaterials aus der Öffnung des Innenbehälters herausgedrängt wird.

Eine Verbindung zwischen Einbauteil und Halteteil kann zweckmäßigerweise über einen in das Halteteil formschlüssig eingreifenden Stift hergestellt werden.

Der Stift kann, um ein unbeabsichtigtes Lösen auch nach dem Ausschäumen zu verhindern, mit in das Halteteil eingreifenden Widerhaken versehen sein.

Die guten schwingungsdämpfenden Eigenschaften des elastischen Halteteils machen den erfindungsgemäßen Aufbau besonders gut geeignet für die Anbringung eines Verdampfers in der Lagerkammer.

Die Aufgabe wird ferner gelöst durch ein Verfahren zum Montieren eines Kältegeräts mit den Schritten:
a) Anbringen eines elastisch verformbaren Halteteils in einer Öffnung eines Innenbehälters des Kältegeräts;
b) Versetzen des Halteteils in eine elastisch gespannte Konfiguration, in der es die Öffnung schaumdicht absperrt;
c) Anbringen einer isolierenden Schaumstoffschicht an einer Außenseite des Innenbehälters; und
d) Entspannenlassen des Halteteils.

Die elastisch gespannte Konfiguration wird in Schritt b) vorzugsweise dadurch erzeugt, dass das Halteteil zwischen Einbauteil und Innenbehälter komprimiert wird.

Weitere Merkmale und Vorteile der Erfindung ergeben sich aus der nachfolgenden Beschreibung von Ausführungsbeispielen unter Bezugnahme auf die beigefügten Figuren. Aus dieser Beschreibung und den Figuren gehen auch Merkmale der Ausführungsbeispiele hervor, die nicht in den Ansprüchen erwähnt sind. Solche Merkmale können auch in anderen als den hier spezifisch offenbarten Kombinationen auftreten. Die Tatsache, dass mehrere solche Merkmale in einem gleichen Satz oder in einer anderen Art von Textzusammenhang miteinander erwähnt sind, rechtfertigt daher nicht den Schluss, dass sie nur in der spezifisch offenbarten Kombination auftreten können; stattdessen ist grundsätzlich davon auszugehen, dass von mehreren solchen Merkmalen auch einzelne weggelassen oder abgewandelt werden können, sofern dies die Funktionsfähigkeit der Erfindung nicht in Frage stellt. Es zeigen:
- Fig. 1: einen schematischen Querschnitt durch ein erfindungsgemäßes Haushaltskältegerät.
- Fig. 2: ein vergrößertes Detail aus Fig. 1 gemäß einer ersten Ausgestaltung in teilfertigem Zustand;
- Fig. 3: das Detail aus Fig. 2 nach dem Ausschäumen;
- Fig. 4: ein vergrößertes Detail aus Fig. 1 gemäß einer zweiten Ausgestaltung in teilfertigem Zustand;
- Fig. 5-8: jeweils Phasen des Zusammenbaus des Details aus Fig. 4.

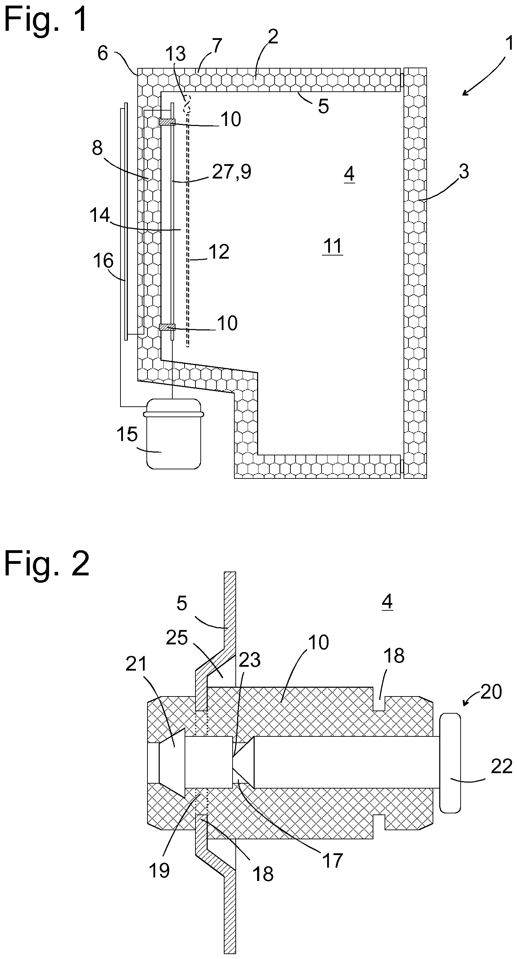

Fig. 1 zeigt in einem schematischen Querschnitt ein Haushaltskältegerät, hier einen Kühlschrank, gemäß der vorliegenden Erfindung. Ein Gehäuse 1 des Kühlschranks umfasst in fachüblicher Weise einen Korpus 2 und eine daran angeschlagene Tür 3, die einen Innenraum 4 begrenzen. Der Korpus umfasst einen aus Kunststoff einteilig tiefgezogenen Innenbehälter 5, eine aus diversen Bauteilen zusammengefügte Außenhaut 6 und eine Schicht aus Isolationsmaterial 7, die durch Einspritzen und Expandierenlassen von Polyurethanharz in einen von Innenbehälter 5 und Außenhaut 6 begrenzten Hohlraum erhalten ist.

In dem Innenraum 4 ist vor einer Rückwand 8 ein Einbauteil 27, hier ein Verdampfer 9, mit Hilfe von am Innenbehälter 4 angreifenden Halteteilen 10 montiert. Der Verdampfer 9 kann selber die Rückseite einer für die Unterbringung von Kühlgut genutzten Lagerkammer 11 bilden, oder der Innenraum 4 kann durch eine Zwischenwand 12 in die Lagerkammer 11 und eine Verdampferkammer 14 unterteilt sein, wobei dann ein Ventilator 13 zum Umwälzen von Kaltluft zwischen der Verdampferkammer 14 und der Lagerkammer 11 vorgesehen ist. Der Verdampfer 8 ist mit einem Verdichter 15 und einem Verflüssiger 16 in einem Kältemittelkreislauf verbunden.

Fig. 2 zeigt ein Stück der Rückwand des Innenbehälters 5 mit einem daran befestigten Halteteil 10 gemäß einer ersten Ausgestaltung der Erfindung. Das aus einem elastisch verformbaren Schaumstoff gebildete Halteteil 10 hat im Wesentlichen die Form eines Hohlzylinders mit einem zentralen Durchgang 17 und außen umlaufenden Nuten 18. Das Halteteil 10 ist in eine Öffnung 19 des Innenbehälters 4 so eingeschoben, dass die Ränder der Öffnung 19 in eine der Nuten eingreifen.

Vom Innenraum 4 her ist ein Stift 20 zur Verriegelung in den Durchgang 17 eingeschoben. Der Stift 20 dehnt den Durchgang 17 und drückt den Schaumstoff des Halteteils 10 von Innen gegen die Ränder der Öffnung 19. Eine von innen in den Schaumstoff des Halteteils 10 eindringende kegelförmige Spitze des Stifts 20 befindet sich jenseits der Öffnung 19 und bildet einen Widerhaken 21, der den Stift 20 im Halteteil 10 sichert. Zwischen dem Widerhaken 21 und einem im Innenraum 4 frei liegenden Kopf 22 des Stifts 20 befindet sich eine Sollbruchstelle 23.

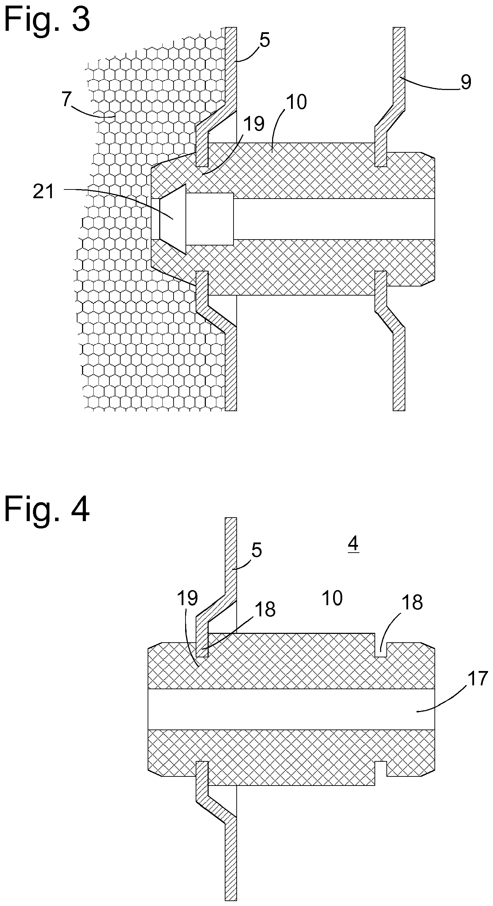

Wenn der Korpus 2 des Kältegeräts ausgeschäumt wird und der Raum auf der linken Seite des Innenbehälters 5 sich mit Isolationsmaterial 7 anfüllt, wird unter dem Druck des Isolationsmaterials zwar auch der über den Innenbehälter 5 überstehende Teil des Halteteils 10 etwas gestaucht, doch die Anwesenheit des Stifts 20 und insbesondere des kegelförmigen Widerhakens 21 verhindert, dass durch das Isolationsmaterial 7 das Halteteil 10 aus der Öffnung 19 oder der Stift 20 aus dem Durchgang 17 herausgedrängt wird. Nach dem Ausschäumen kann der Verriegelungsstift 20 an der Sollbruchstelle 23 abgeknickt und entfernt werden, und ein beliebiges Einbauteil, insbesondere der Verdampfer 9, kann wie in Fig. 3 gezeigt auf das in den Innenraum 4 vorspringende Ende des Halteteils 10 aufgerastet werden.

Fig. 4 zeigt ein Halteteil 10 gemäß einer zweiten Ausgestaltung in einer Öffnung 19 des Innenbehälters 5. Wie mit Bezug auf Fig. 2 beschrieben, ist das Halteteil 10 hohlzylindrisch mit einem zentralen Durchgang 17 und umlaufenden Nuten 18 und besteht aus einem elastischen Schaumstoff.

Der Verdampfer 9 ist ein Rollbondverdampfer und ist in fachüblicher Weise aus zwei metallischen Platten 28, 29, vorzugsweise aus Aluminium, zusammengefügt, von denen eine ein Kanalbild mit Kältemittelleitungen 30 aufweist.

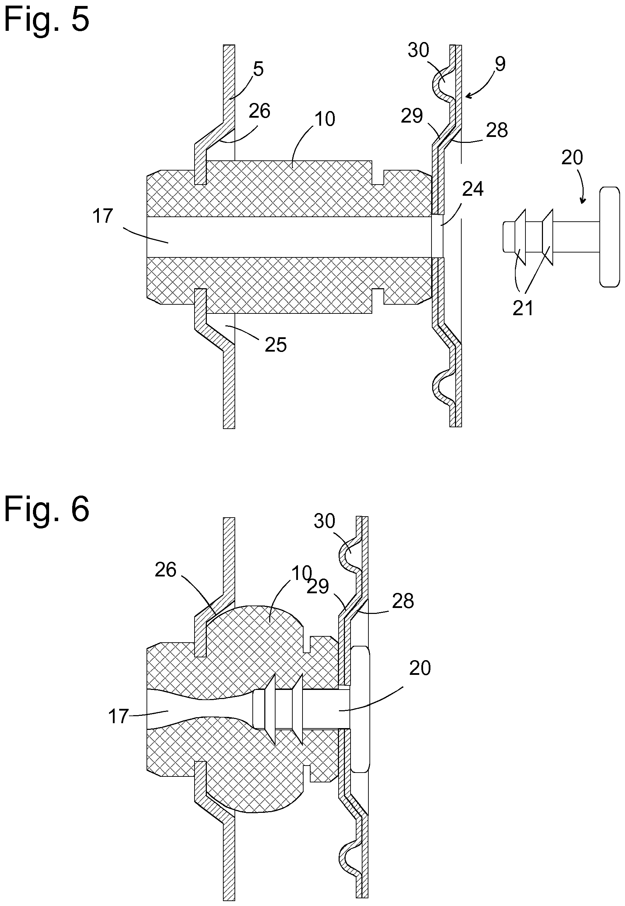

Der Verdampfer 9 kann wie in Fig. 3 gezeigt, auf das Halteteil aufgerastet werden und in eine seiner Nuten eingreifen; vorzugsweise jedoch wird er wie in Fig. 5 gezeigt an einer Stirnseite des Halteteils 10 platziert und an diesem mittels eines Stifts 20 verankert, der durch eine mit dem Durchgang 17 überlappende Öffnung 24 des Verdampfers hindurchgeschoben wird.

Im allgemeinen ist der Verdampfer 9 über mehrere Halteteile 10 am Innenbehälter 5 fixiert. Dabei erlaubt die Elastizität der Halteteile 10 vorteilhafterweise einen Ausgleich von Toleranzen zwischen der Platzierung der Halteteile 10 am Innenbehälter 5 einerseits und der Verteilung der Öffnungen 24 am Verdampfer 9 andererseits.

Der Schaft des Stifts 20 ist hier mit zwei kegelförmig umlaufenden Widerhaken 21 versehen, die nach dem Einschieben in den Durchgang von innen in den Schaumstoff des Halteteils 10 eindringen.

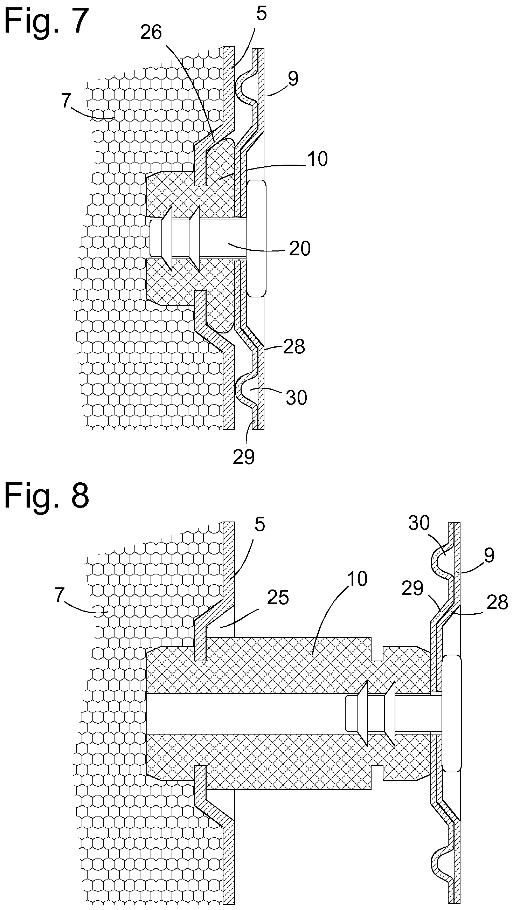

Nach dem Einschieben des Stifts 20 wird der Verdampfer 9 wie in Fig. 6 gezeigt fest gegen den Innenbehälter 5 gepresst, wobei die Halteteile 10, die ihn mit dem Innenbehälter 5 verbinden, flachgedrückt werden. Vorzugsweise geht die Stauchung noch über die in Fig. 6 gezeigte Konfiguration hinaus, so dass wie in Fig. 7 zu sehen der Stift 20 in die Öffnung 19 des Innenbehälters 5 einrückt und die Widerhaken 21 auf einer vom Verdampfer 9 abgewandten Seite des Innenbehälters 5 zu liegen kommen. Der Druck, dem ein mittlerer Bereich des Halteteils 10 zwischen Innenbehälter 5 und Verdampfer 9 ausgesetzt ist, sowie die Tatsache, dass der Schaumstoff durch den Stift 20 daran gehindert ist, den Durchgang 17 aufzufüllen, sorgen für einen dichten, für das expandierende Isolationsmaterial undurchdringlichen Kontakt zwischen Halteteil 10 und Innenbehälter 5. Zur Steigerung des Kontaktdrucks zwischen Halteteil 10 und Innenbehälter 5 kann hier auch die Tatsache beitragen, dass die Öffnung 19 in einer Vertiefung 25 des Innenbehälters 5 angeordnet ist und Seitenwände 26 der Vertiefung 25 die Freiheit des Halteteils, dem einwirkenden Druck durch seitliches Ausweichen zu entkommen, einschränken.

Das Halteteil 10 wird hier so stark zusammengedrückt, dass die Leitungen 30 des Verdampfers 9 mit dem Innenbehälter 5 in Kontakt kommen. Dadurch ist die gesamte von dem Verdampfer 9 überdeckte Fläche des Innenbehälters 5 gegen den beim Ausschäumen gegen den Druck des Isolationsmaterials 7 abgestützt. Eine Durchbiegung der überdeckten Fläche wird so verhindert.

Selbstverständlich könnte abweichend von der Darstellung der Figuren der Verdampfer 9 die Leitungen 30 auch auf seiner vom Innenbehälter 9 abgewandten Seite tragen. Die gezeigte Anordnung ist jedoch bevorzugt, da sie es bei geringerer Stauchung des Halteteils 10 erlaubt, Verdampfer 9 und Innenbehälter 5 in Kontakt zu bringen.

Da außerdem durch die Stauchung die Poren des Schaumstoffs des Halteteils 10 selbst extrem verengt sind, kann das Isolationsmaterial auch nicht in das Halteteil 10 selber eindringen. Daher kehrt dieses, wenn nach Abbinden des Isolationsmaterials der Druck gegen den Verdampfer 9 wieder aufgehoben wird, elastisch in eine in Fig. 8 dargestellte ausgestreckte Konfiguration zurück, in der es den Verdampfer 9 vom Innenbehälter beabstandet und schwingungsisoliert trägt.

Dank der Abstützung des Innenbehälters 5 während des Ausschäumens durch den dagegengedrückten Verdampfer 9 sind beide, nachdem die Halteteile 10 sich wieder entspannt haben, mit guter Genauigkeit parallel zueinander, und der Zwischenraum zwischen Innenbehälter 5 und Verdampfer 9 ist frei von Engstellen, die eine freie Luftzirkulation behindern könnten.

### BEZUGSZEICHEN

- 1: Gehäuse
- 2: Korpus
- 3: Tür
- 4: Innenraum
- 5: Innenbehälter
- 6: Außenhaut
- 7: Isolationsmaterial
- 8: Rückwand
- 9: Verdampfer
- 10: Halteteil
- 11: Lagerkammer
- 12: Zwischenwand
- 13: Ventilator
- 14: Verdampferkammer
- 15: Verdichter
- 16: Verflüssiger
- 17: Durchgang
- 18: Nut
- 19: Öffnung
- 20: Stift
- 21: Widerhaken
- 22: Kopf
- 23: Sollbruchstelle
- 24: Öffnung
- 25: Vertiefung
- 26: Seitenwand
- 27: Einbauteil
- 28: Platte
- 29: Platte
- 30: Leitung

## Patentansprüche

1. Kältegerät, insbesondere Haushaltskältegerät, mit einem Innenbehälter (5), an dessen Außenseite eine Schicht aus Isolationsmaterial (7) angrenzt und an dessen Innenseite ein Einbauteil (27) angebracht und mit dem Innenbehälter (5) über wenigstens ein Halteteil (10) verbunden ist, wobei das elastisch verformbare Halteteil (10) in einer Öffnung (19) des Innenbehälters (5) gehalten ist und in eine elastisch gespannte Konfiguration versetzbar ist, in der es die Öffnung (19) schaumdicht absperrt, und in der elastisch gespannten Konfiguration ein zwischen dem Innenbehälter (5) und dem Einbauteil (27) liegender Abschnitt des Halteteils (10) komprimiert ist, **dadurch gekennzeichnet, dass** das Halteteil (10) aus einem Schaumstoff besteht.

2. Kältegerät nach Anspruch 1, **dadurch gekennzeichnet, dass** , **dadurch gekennzeichnet, dass** das Einbauteil (27) ein Verdampfer (9) ist, dass das Einbauteil (27) in der elastisch gespannten Konfiguration des Halteteils (10) am Innenbehälter (5) anliegt und in einer entspannten Konfiguration des Halteteils (10) vom Innenbehälter (5) beabstandet ist.

3. Kältegerät nach einem der vorhergehenden Ansprüche, **dadurch gekennzeichnet, dass** das Einbauteil (27) mit dem Halteteil (10) über einen in das Halteteil (10) formschlüssig eingreifenden Stift (20) verbunden ist.

4. Kältegerät nach Anspruch 3, **dadurch gekennzeichnet, dass** der Stift (20) in das Halteteil (10) eingreifende Widerhaken (21) aufweist.

5. Kältegerät nach einem der vorhergehenden Ansprüche, **dadurch gekennzeichnet, dass** das Einbauteil (27) ein Verdampfer (9) ist.

6. Kältegerät nach einem der vorhergehenden Ansprüche, **dadurch gekennzeichnet, dass** die Öffnung (19) in einer Vertiefung (25) des Innenbehälters (5) angeordnet ist.

7. Verfahren zum Montieren eines Kältegeräts nach einem der vorhergehenden Ansprüche, mit den Schritten:
a) Anbringen wenigstens eines elastisch verformbaren Halteteils (10) aus Schaumstoff in einer Öffnung (19) eines Innenbehälters (5) des Kältegeräts; dann
b) Versetzen des Halteteils (10) in eine elastisch gespannte Konfiguration, in der es die Öffnung (19) schaumdicht absperrt; dann
c) Anbringen einer Schicht aus Isolationsmaterial (8) an einer Außenseite des Innenbehälters (5); und dann
d) Entspannenlassen des Halteteils (10).

8. Verfahren nach Anspruch 7, **dadurch gekennzeichnet, dass** in Schritt b) ein Einbauteil (27) an dem Halteteil (10) befestigt wird.

9. Verfahren nach Anspruch 8, **dadurch gekennzeichnet, dass** in Schritt b) das Halteteil (10) durch Komprimieren zwischen Einbauteil (27) und Innenbehälter (5) in die elastisch gespannte Konfiguration versetzt wird.

## Claims

1. Refrigerator, in particular household refrigerator, with an interior container (5), the outside of which is abutted by a layer made of insulating material (7) and to the inside of which a built-in part (27) is affixed and is connected to the interior container (5) by way of at least one retaining part (10), wherein the elastically deformable retaining part (10) is held in an opening (19) of the interior container (5) and can be displaced into an elastically tensioned configuration in which it blocks the opening (19) in a foam-tight manner, and a section of the retaining part (10) lying between the interior container (5) and the built-in part (27) is compressed in the elastically tensioned configuration, **characterised in that** the retaining part (10) consists of a foam material.

2. Refrigerator according to claim 1, **characterised in that** the built-in part (27) is an evaporator (9), that the built-in part (27) abuts the interior container (5) in the elastically tensioned configuration of the retaining part (10) and is spaced apart from the interior container (5) in a tensioned configuration of the retaining part (10).

3. Refrigerator according to one of the preceding claims, **characterised in that** the built-in part (27) is connected to the retaining part (10) by way of a pin (20) engaging into the retaining part (10) in a form-fit manner.

4. Refrigerator according to claim 3, **characterised in that** the pin (20) has barbed hooks (21) engaging into the retaining part (10).

5. Refrigerator according to one of the preceding claims, **characterised in that** the built-in part (27) is an evaporator (9).

6. Refrigerator according to one of the preceding claims, **characterised in that** the opening (19) is arranged in a depression (25) of the interior container (5).

7. Method for mounting a refrigerator according to one of the preceding claims, having the steps:
a) affixing at least one elastically deformable retaining part (10) made of foam material in an opening (19) of an interior container (5) of the refrigerator; then
b) displacing the retaining part (10) into an elastically tensioned configuration in which it blocks the opening (19) in a foam-tight manner; then
c) affixing a layer made of insulating material (8) to an outside of the interior container (5); and then
d) detensioning the retaining part (10).

8. Method according to claim 7, **characterised in that** in step b) a built-in part (27) is fastened to the retaining part (10).

9. Method according to claim 8, **characterised in that** in step b) the retaining part (10) is displaced into the elastically tensioned configuration by compression between built-in part (27) and interior container (5).

## Revendications

1. Appareil frigorifique, en particulier appareil frigorifique ménager, avec un contenant intérieur (5) dont le côté extérieur est contigu à une couche de matériau isolant (7) et sur le côté intérieur duquel une pièce de montage (27) est apposée et reliée au contenant intérieur (5) via au moins une pièce de maintien (10), dans lequel la pièce de maintien (10) déformable élastiquement est maintenue dans un orifice (19) du contenant intérieur (5) et déplaçable dans une configuration élastiquement tendue, dans laquelle elle obstrue l'orifice (19) de façon étanche à la mousse, et dans la configuration élastiquement tendue, une section de la pièce de maintien (10) située entre le contenant intérieur (5) et la pièce de montage (27) est comprimée, **caractérisé en ce que** la pièce de maintien (10) est composée d'une mousse.

2. Appareil frigorifique selon la revendication 1, **caractérisé en ce que** la pièce de montage (27) est un évaporateur (9), **en ce que** la pièce de montage (27) est contiguë au contenant intérieur (5) dans la configuration élastiquement tendue de la pièce de maintien (10) et écartée du contenant intérieur (5) dans une configuration détendue de la pièce de maintien (10).

3. Appareil frigorifique selon l'une des revendications précédentes, **caractérisé en ce que** la pièce de montage (27) est reliée à la pièce de maintien (10) via une goupille (20) s'engrenant par complémentarité de formes dans la pièce de maintien (10).

4. Appareil frigorifique selon la revendication 3, **caractérisé en ce que** la goupille (20) présente des barbillons (21) s'engrenant dans la pièce de maintien (10).

5. Appareil frigorifique selon l'une des revendications précédentes, **caractérisé en ce que** la pièce de montage (27) est un évaporateur (9).

6. Appareil frigorifique selon l'une des revendications précédentes, **caractérisé en ce que** l'orifice (19) est disposé dans une concavité (25) du contenant intérieur (5).

7. Procédé de montage d'un appareil frigorifique selon l'une des revendications précédentes, comprenant les étapes suivantes :
a) apposition d'au moins une pièce de maintien (10) déformable élastiquement en mousse dans un orifice (19) d'un contenant intérieur (5) de l'appareil frigorifique ; ensuite
b) déplacement de la pièce de maintien (10) dans une configuration tendue élastiquement, dans
laquelle elle obstrue l'orifice (19) de façon étanche à la mousse ; ensuite
c) apposition d'une couche de matériau isolant (8) sur un côté extérieur du contenant intérieur (5) ; et ensuite
d) relâchement de la pièce de maintien (10).

8. Procédé selon la revendication 7, **caractérisé en ce que** dans l'étape b), une pièce de montage (27) est fixée à la pièce de maintien (10).

9. Procédé selon la revendication 8, **caractérisé en ce que** dans l'étape b), la pièce de maintien (10) est déplacée dans la configuration tendue élastiquement par compression entre la pièce de montage (27) et le contenant intérieur (5).
